Europäisches Patentamt

European Patent Office

Office européen des brevets

(11) Veröffentlichungsnummer: **0 247 569 B1**

# (12) EUROPÄISCHE PATENTSCHRIFT

(45) Veröffentlichungstag der Patentschrift:
09.01.91 Patentblatt 91/02

(51) Int. Cl.$^5$: **H04L 7/02**

(21) Anmeldenummer: 87107614.7

(22) Anmeldetag: 25.05.87

(54) Taktregenerierschaltung.

(30) Priorität: 28.05.86 DE 3617909

(43) Veröffentlichungstag der Anmeldung:
02.12.87 Patentblatt 87/49

(45) Bekanntmachung des Hinweises auf die
Patenterteilung:
09.01.91 Patentblatt 91/02

(84) Benannte Vertragsstaaten:
AT BE CH DE ES FR GB GR IT LI LU NL SE

(56) Entgegenhaltungen:
FR-A- 1 603 165
US-A- 4 027 178

(56) Entgegenhaltungen:
JOURNAL OF LIGHTWAVE TECHNOLOGY,
Band LT-2, Nr. 6, Dezember 1984, Seiten
895-900, IEEE, New York, US; D.G. ROSS et al.:
"A highly integrated regenerator for
295.6-Mbit/s undersea optical transmission"
IEEE TRANSACTIONS ON SONICS AND
ULTRASONICS, Band 30, Nr. 3, Mai 1983,
Seiten 119-126, IEEE, New York, US; R.L.
ROSENBERG et al.: "Optical fiber repeatered
transmission systems utilizing SAW filters"

(73) Patentinhaber: Siemens Aktiengesellschaft
Wittelsbacherplatz 2
D-8000 München 2 (DE)

(72) Erfinder: Schrödinger, Karl, Dipl.-Ing.
Weinstrasse 2c
D-8037 Olching (DE)

## Beschreibung

Die Erfindung bezieht sich auf eine aus wenigstens zwei Taktregenerierschaltungen bestehende Mehrzahl von Regenerierschaltungen, die jeweils für voneinander verschiedene Taktfrequenzen vorgesehen sind und die jeweils wenigstens einen SAW-(surface acoustic wave)-Filterbaustein enthalten, dem ein eingangsseitiger Taktextraktionsschaltkreis aus Datenimpulsen gewonnene Impulse zuführt.

Taktregenerierschaltungen werden schon seit längerem mit Hilfe eines Bandpaßfilters realisiert, das von Impulsen, die aus den empfangenen Datenimpulsen abgeleitet werden, gespeist wird. So ist z.B. aus der US-PS 4 004 162 eine Taktregenerierschaltung bekannt, bei der mit Hilfe eines Taktextraktionsschaltkreises, der im wesentlichen aus einem Differenzierglied und einer dem Differenzierglied nachgeschalteten Gleichrichteranordnung besteht, die von der Regenerierschaltung empfangenen Datenimpulse aufbereitet und dann einem Bandpaß zugeführt werden. Der Bandpaß hat eine Mittenfrequenz, die auf die Taktfrequenz der Datenimpulse abgestimmt ist. Durch die Ausgangsimpulse des Taktextraktionsschaltkreises wird der Bandpaß zu Schwingungen angeregt, die die Frequenz des Signaltaktes haben. Aus diesen Schwingungen läßt sich ein Taktsignal gewinnen, mit dessen Hilfe die ankommenden, in der Impulsform verschliffenen Datenimpulse phasenrichtig regeneriert werden können.

Das Bandpaßfilter in einer solchen Taktregenerierschaltung wird neuerdings häufig durch ein SAW-Filter realisiert, das unter Verwendung akustischer Oberflächenwellen arbeitet, vgl. hierzu z.B. IEEE, Journal on Selected Areas in Communications, Vol. SAC-2, No. 6, November 1984, Seiten 957-965.

Außerdem führt der zunehmende Einsatz pulscodierter Datenübertragung, insbesondere auch bei der sogenannten Lichtwellenleiterübertragungstechnik dazu, daß Taktregenerierschaltungen in relativ großer Stückzahl benötigt werden.

Es ist daher Aufgabe vorliegender Erfindung, eine Mehrzahl von Taktregenerierschaltungen der eingangs genannten Art so weiterzubilden, daß die einzelnen Regenerierschaltungen dieser Mehrzahl für voneinander verschiedene Taktfrequenzen auf eine möglichst rationelle Weise hergestellt werden können.

Erfindungsgemäß ergibt sich die Lösung dieser Aufgabe dadurch, daß zumindest der Taktextraktionsschaltkreis jeder Regenerierschaltung ein für alle Regenerierschaltungen gleicher IC-Baustein ist, dessen Ausgangsimpulse eine bei allen Regenerierschaltungen gleiche Impulslänge haben, und daß die Filterbausteine für diese Mehrzahl von Regenerierschaltungen eine jeweils in Abhängigkeit von der jeweiligen Taktfrequenz gewählte und mit abnehmender Taktfrequenz zunehmende Phase aufweisen.

Dadurch ist es möglich, einen IC-Baustein zu schaffen, der für alle Regenerierschaltungen, ohne Rücksicht darauf, für welche Taktfrequenz die jeweilige Regenerierschaltung vorgesehen ist, immer gleich ist und daher in entsprechend großer Stückzahl produziert werden kann.

Zwar werden dadurch dem Filterbaustein stets Impulse gleicher Impulslänge zugeführt. Da aber ein Filterbaustein für eine niedrigere Taktfrequenz mit einer größeren Phase versehen ist, als ein Filterbaustein für eine demgegenüber höhere Taktfrequenz, ergibt sich dennoch keine störende zeitliche Verschiebung der Wirksamkeit der Taktfrequenzimpulse bei der Regenerierung der Datenimpulse.

In weiterer Ausgestaltung der Erfindung kann noch vorgesehen sein, daß ein ausgangsseitig des Filterbausteins vorgesehener Lastwiderstand zumindest zum Teil als einstellbarer Widerstand ausgebildet ist und/oder daß der einstellbare Lastwiderstand wenigstens zum Teil als Heißleiter ausgebildet ist.

Auf diese Weise ist ein nachträglicher Feinabgleich der Phase des Filterbausteines möglich und mit Hilfe des Heißleiters kann eine unerwünschte temperaturbedingte Phasenänderung kompensiert werden.

Schließlich kann im Rahmen vorliegender Erfindung noch vorgesehen sein, daß der IC-Baustein derart umschaltbar ausgebildet ist, daß die Länge der Ausgangsimpulse des Taktextraktionsschaltkreises stufenweise veränderbar ist.

Durch diese Auslegung des IC-Bausteins ist es vorteilhaft möglich, die Impulsdauer der Ausgangsimpulse des Taktextraktionsschaltkreises in Stufen umzuschalten, wodurch der IC-Baustein noch besser an unterschiedliche Taktfrequenzen angepaßt werden kann.

Nachfolgend werden Ausführungsbeispiele der Erfindung anhand von drei Figuren noch näher erläutert.

Dabei zeigen,

Fig. 1 in Form eines Blockschaltbildes den an sich bekannten Aufbau einer Taktregenerierschaltung,

Fig. 2a und Fig. 2b jeweils in Diagrammform die zeitlichen Relationen zwischen einem Datenimpuls und einem Taktextraktionsschaltkreis-Ausgangsimpuls, und

Fig. 3 grob schematisch ein Schaltbild, das die Anordnung eines veränderbaren Lastwiderstandes am Ausgang des Filterbausteines zeigt.

Im einzelnen ist den Figuren zu entnehmen, daß die Taktregenerierschaltung im wesentlichen aus drei Schaltungsbausteinen besteht, nämlich einem Taktextraktionsschaltkreis 1, dem über eine ankommende Datenleitung 2 relativ verschliffene Datenimpulse zugeführt werden. Die Datenimpulse sind als Zufallsfolge auf die zeitlichen Orte verteilt, die durch einen Signaltakt bestimmt werden, der als sogenannte bit-Frequenz die maximale zeitliche Aufeinanderfolge der Datenimpulse bestimmt.

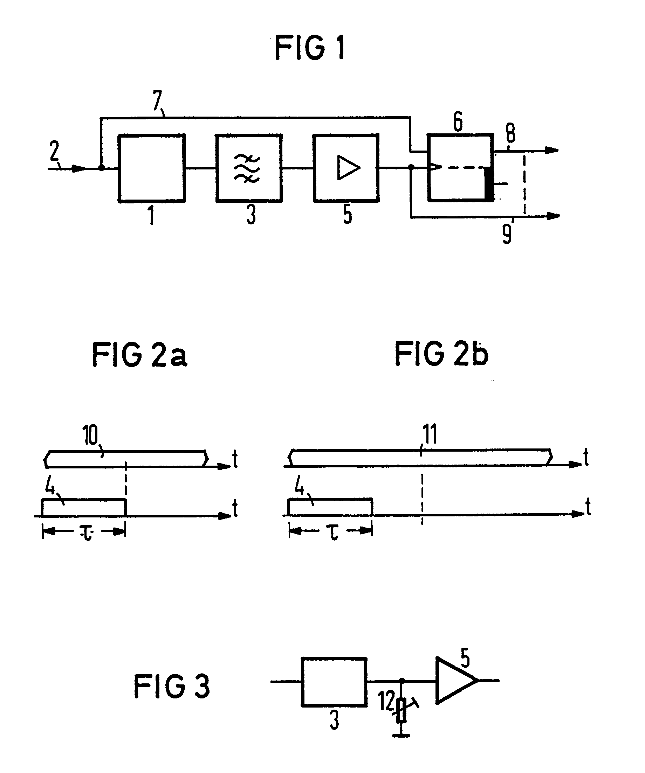

Der Taktextraktionsschaltkreis 1 enthält im wesentlichen ein Differenzierglied und eine Gleichrichterschaltung, ist ausgangsseitig mit einem SAW-Filterbaustein 3 verbunden und liefert diesem Impulse 4 (vergleiche hierzu auch Fig. 2a und Fig. 2b) relativ kurzer Dauer, wobei die zeitliche Länge dieser Impulse unabhängig von der bit-Frequenz der Datenübertragung, also der Taktfrequenz, immer gleich ist.

Der Filterbaustein 3 wird durch die Ausgangsimpulse des Bausteines 1 zu Schwingungen angeregt, die der Taktfrequenz entsprechen, so daß am Ausgang des Filterbausteines 3 die Taktfrequenz zur Verfügung steht.

In einer an den Filterbaustein 3 angeschlossenen Verstärker-und/oder Impulsformerstufe 5 werden schließlich die Schwingungen des Filterbausteines 3 so aufbereitet, daß am Ausgang des Bausteines 5 Taktfrequenzimpulse zur Verfügung stehen, die zur Steuerung einer Kippstufe 6 geeignet sind. Der Kippstufe 6 werden außerdem die auf der Leitung 2 ankommenden Datenimpulse über eine Leitung 7 zugeführt, so daß an einem Ausgang 8 der Kippstufe 6 regenerierte Datenimpulse abgenommen werden können, die phasenrichtig auf jeweils den zeitlichen Ort eines Taktimpulses synchronisiert sind. Über eine Leitung 9 kann dem Baustein 5 zusätzlich der Signaltakt entnommen werden.

Bei der Herstellung einer solchen Schaltung, wie sie in Fig. 1 in Form eines Blockdiagramms dargestellt ist, in rationeller Massenfertigung, ist es wünschenswert, einen Großteil dieser Schaltung in der sogenannten integrierten Schaltungstechnik ausbilden zu können. Hierzu sind insbesondere die Bausteine 1, 5 und 6 geeignet.

Eine z.B. die Bausteine 1, 5 und 6 realisierende IC-Schaltung, die auch bei Regenerierschaltungen für voneinander verschiedene Taktfrequenzen verwendet werden soll, hat jedoch den Nachteil, daß wie die Fig. 2a und 2b zeigen, zwar bei einer Datenübertragung mit einer bestimmten höheren Taktfrequenz die zur Datenregenerierung im Baustein 6 benötigten Taktimpulse 4 den Baustein 6 phasenrichtig ansteuern (Fig. 2a), so daß die Datenregenerierung im Baustein 6 effektiv ist. Dagegen ist bei einer relativ niedrigen Taktfrequenz die zeitliche Lage eines regenerierten Taktimpulses 4 gegenüber einem nun zeitlich längeren Datenimpuls 11 ungünstig für eine effektive Regenerierung des Datenimpulses im Baustein 6 (Fig. 2b).

Der SAW-Filterbaustein 3 ist daher mit einer Phase versehen, die umso größer ist, je niedriger die Taktfrequenz ist, für die der Filterbaustein 3 vorgesehen ist. Dies ist z.B. sehr einfach durch unterschiedliche Bemessung des Abstandes der Sendeelektrodenkonfiguration von der Empfangselektrodenkonfiguration des SAW-Filterbausteines möglich.

Auf diese Weise ist es möglich, die Bausteine 1, 5 und 6 als eine IC-Schaltung zusammenzufassen, die für Regenerierschaltungen, für unterschiedliche Taktfrequenzen immer gleich ist. Den SAW-Baustein 3, der ohnehin für Regenerierschaltungen, die für unterschiedliche Taktfrequenzen vorgesehen sind, jeweils auf die jeweilige Taktfrequenz zugeschnitten werden muß, versieht man dafür mit einer bei abnehmender Taktfrequenz zunehmenden Phase.

Ein den Baustein 6 ansteuernder Taktimpuls 4 wird dadurch in zeitlicher Relation zu einem Datenimpuls 11 immer so am Baustein 6 wirksam, daß eine effektive, phasenrichtige Datenregenerierung mit einer Schaltungsanordnung, wie sie in Fig. 1 dargestellt ist, erzielbar ist.

Zur Feinabstimmung der Phase des Bausteines 3 ist es vorteilhaft, wenn man einen regelbaren Lastwiderstand 12 am Ausgang des Filterbausteines 3 vorsieht (Fig. 3). Verwendet man zumindest für einen Teil des Lastwiderstandes 3 einen Heißleiter, so kann dadurch eine unerwünschte Änderung der Phase des Bausteines 3, die durch Temperaturschwankungen verursacht wird, kompensiert werden.

## Ansprüche

1. Aus wenigstens zwei Taktregenerierschaltungen bestehende Mehrzahl von Regenerierschaltungen, die jeweils für voneinander verschiedene Taktfrequenzen vorgesehen sind und die jeweils wenigstens einen SAW-(surface acoustic wave)-Filterbaustein enthalten, dem ein eingangsseitiger Taktextraktionsschaltkreis aus Datenimpulsen gewonnene Impulse zuführt, **dadurch gekennzeichnet,** daß zumindest der Taktextraktionsschaltkreis (1) jeder Regenerierschaltung ein für alle Regenerierschaltungen gleicher IC-Baustein ist, dessen Ausgangsimpulse eine bei allen Regenerierschaltungen gleiche Impulslänge haben, und daß die Filterbausteine (3) für diese Mehrzahl von Regenerierschaltungen eine jeweils in Abhängigkeit von der jeweiligen Taktfrequenz gewählte und mit abnehmender Taktfrequenz zunehmende Phase aufweisen.

2. Mehrzahl von Regenerierschaltungen nach Anspruch 1, **dadurch gekennzeichnet,** daß ein ausgangsseitig des Filterbausteins vorgesehener Lastwiderstand (12) zumindest zum Teil als einstellbarer Widerstand ausgebildet ist.

3. Mehrzahl von Regenerierschaltungen nach Anspruch 2, **dadurch gekennzeichnet,** daß der einstellbare Lastwiderstand (12) wenigstens zum Teil als Heißleiter ausgebildet ist.

4. Mehrzahl von Regenerierschaltungen nach einem der vorhergehenden Ansprüche, **dadurch gekennzeichnet,** daß der IC-Baustein derart umschaltbar ausgebildet ist, daß die Länge der Ausgangsimpulse des Taktextraktionsschaltkreises stufenweise veränderbar ist.

## Claims

1. Plurality of regeneration circuits, consisting of at least two clock pulse regeneration circuits, which are provided in each case for clock pulse frequencies differing from one another and which in each case contain at least one SAW (surface acoustic wave) filter building block, to which a clock pulse extraction switching circuit on the input side supplies pulses obtained from data pulses, characterized in that at least the clock pulse extraction switching circuit (1) of each regeneration circuit is an IC building block which is the same for all regeneration circuits, the output pulses of the IC building block having a pulse length which is the same with all regeneration circuits, and in that the filter building blocks (3) for this plurality of regeneration circuits have a phase in each case chosen in dependence on the respective clock pulse frequency and increasing with decreasing clock pulse frequency.

2. Plurality of regeneration circuits according to claim 1, characterized in that a load resistance (12) provided at the output side of the filter building block is constructed at least partially as an adjustable resistance.

3. Plurality of regeneration circuits according to claim 2, characterized in that the adjustable load resistance (12) is constructed at least partially as a thermistor.

4. Plurality of regeneration circuits according to one of the preceding claims, characterized in that the IC building block is constructed so that it can be changed over in such a way that the length of the output pulses of the clock pulse extraction switching circuit can be changed in stages.

## Revendications

1. Ensemble de circuits de régénération, comportant au moins deux circuits de régénération de cadence, qui sont prévus respectivement pour des fréquences de cadences différentes entre elles et contiennent chacun au moins un module formant filtre SAW (Surface Acoustic Wave, c'est-à-dire ondes acoustiques de surface), auquel un circuit d'extraction de cadence, situé côté entrée, envoie des impulsions obtenues à partir d'impulsions de données, caractérisé par le fait qu'au moins le circuit d'extraction de cadence (1) de chaque circuit de régénération est un module à circuits intégrés, qui est identique pour tous les circuits de régénération et dont les impulsions de sortie possèdent une même durée pour tous les circuits de régénération, et que les modules formant filtres (3) prévus pour cet ensemble de circuits de régénération possèdent une phase, qui est choisie respectivement en fonction de la fréquence de cadence respective et augmente lorsque la fréquence de cadence diminue.

2 . Ensemble de circuits de régénération suivant la revendication 1, caractérisé par le fait qu'une résistance de charge (12), prévue sur le côté sortie du module formant filtre, est réalisée au moins en partie sous la forme d'une résistance réglable.

3. Multiplicité de circuits de régénération suivant la revendication 2, caractérisée par le fait que la résistance de charge réglable (12) est agencée au moins en partie sous la forme d'une thermistance

4. Ensemble de circuits de régénération suivant l'une des revendications précédentes, caractérisé par le fait que le module à circuits intégrés est agencé de manière à être commutable de telle sorte que la durée des impulsions de sortie du circuit d'extraction de cadence peut être modifiée d'une manière échelonnée.

# FIG 1

# FIG 2a

# FIG 2b

# FIG 3